# EUROPEAN PATENT APPLICATION

(11) **EP 2 844 005 A1**
(43) Date of publication of application: **04.03.2015**
(21) Application number: 12875037.9
(22) Date of filing: 26.04.2012
(51) Int. Cl.: H04W 48/20

(54) **METHOD FOR ACCESSING PACKET SWITCHING NETWORK, WLAN ACCESS SYSTEM AND USER EQUIPMENT**

(71) Applicant: Huawei Technologies Co., Ltd, Shenzhen, Guangdong 518129 (CN)
(72) Inventor: LIU, Hai, Shenzhen Guangdong 518129 (CN); JIN, Weisheng, Shenzhen Guangdong 518129 (CN); ZHANG, Aiqin, Shenzhen Guangdong 518129 (CN)
(74) Representative: Pfenning, Meinig & Partner GbR
(86) International application number: PCT/CN2012/074752
(87) International publication number: WO 2013/159310

(57) **Abstract**

The present invention discloses a packet-switched network access method, a WLAN access system and a user equipment. The packet-switched network access method includes: receiving indication information sent by a user equipment attached to a WLAN or sent by an HSS/AAA, where the indication information is used to indicate whether the user equipment is capable of providing information of accessing a PS network; and determining, according to the indication information, whether establishing a PDN connection after authentication is successful or after a layer 3 message sent by the user equipment is received, so that the user equipment accesses a PS network by using the WLAN. In the packet-switched network access method, the WLAN access system and the user equipment according to the embodiments of the present invention, whether the user equipment is capable of providing information of accessing a packet switched PS network is indicated to the WLAN access system, so that the WLAN access system can establish the PDN connection correctly according to the indication. As a result, different types of UEs can access the PS network by using the WLAN, which can improve user experience.

## Description

### TECHNICAL FIELD

The present invention relates to the communications field, and in particular, to a packet-switched network access method, a WLAN access system and a user equipment in the communications field.

### BACKGROUND

With development and progress of communications technologies, mobile networks are continuously evolved and converged. An evolved packet core network (Evolved Packet Core Network, "EPC" for short) allows access of a wireless local area network (Wireless Local Area Network, "WLAN" for short). This is a trend of network evolution and convergence.

Currently, a possible method for the WLAN to access the EPC is: For a first type of user equipment (User Equipment, "UE" for short) that does not provide a WLAN access gateway with parameters such as an access point name (Access Point Name, "APN" for short) and a handoff indication, the WLAN access gateway selects a default APN and, after authentication is complete, performs an establishment process of connecting to a packet data network (Packet Data Network, "PDN" for short). Alternatively, another possible method for the WLAN to access the EPC is: for a second type of user equipment that provides a WLAN access gateway with parameters such as an APN and a handoff indication, the WLAN access gateway selects an APN according to these parameters and determines whether to perform a handoff.

However, for a UE that is intended to access a PS network by using the WLAN, the WLAN access gateway is incapable of distinguishing the type of UE. Therefore, when the foregoing two types of UEs coexist, an error may occur when the WLAN access gateway performs processing. In particular, when the WLAN access gateway processes access to the EPC according to the first method, the second type of UE may fail in access as a result.

### SUMMARY

Embodiments of the present invention provide a packet-switched network access method, a WLAN access system and a user equipment, which enable different types of UEs to access a PS network by using a WLAN.

According to one aspect, an embodiment of the present invention provides a packet-switched network access method, where the method includes: receiving indication information sent by a user equipment attached to a wireless local area network WLAN or sent by a home subscriber server HSS/an authentication authorization accounting AAA, where the indication information is used to indicate whether the user equipment is capable of providing information of accessing a packet switched PS network; and determining, according to the indication information, whether establishing a packet data network PDN connection after authentication is successful or after a layer 3 message sent by the user equipment is received, so that the user equipment accesses a PS network by using the WLAN.

According to another aspect, an embodiment of the present invention provides a packet-switched network access method, where the method includes: determining indication information, where the indication information is used to indicate whether the user equipment is capable of providing information of accessing a packet switched PS network; and sending the indication information to a wireless local area network WLAN access system, so that the WLAN access system establishes a packet data network PDN connection according to the indication information.

According to still another aspect, an embodiment of the present invention provides a WLAN access system, where the WLAN access system includes: a receiving module, configured to receive indication information sent by a user equipment attached to a wireless local area network WLAN or sent by a home subscriber server HSS/an authentication authorization accounting AAA, where the indication information is used to indicate whether the user equipment is capable of providing information of accessing a packet switched PS network; and a determining module, configured to determine, according to the indication information received by the receiving module, whether establishing a packet data network PDN connection after authentication is successful or after a layer 3 message sent by the user equipment is received, so that the user equipment accesses a PS network by using the WLAN.

According to yet another aspect, an embodiment of the present invention provides a user equipment, where the user equipment includes: a determining module, configured to determine indication information, where the indication information is used to indicate whether the user equipment is capable of providing information of accessing a packet switched PS network; and a sending module, configured to send the indication information determined by the determining module to a wireless local area network WLAN access system, so that the WLAN access system establishes a packet data network PDN connection according to the indication information.

Based on the foregoing technical solutions, in the packet-switched network access method, the WLAN access system and the user equipment according to the embodiments of the present invention, whether a user equipment is capable of providing information of accessing a packet switched PS network is indicated to a WLAN access system, so that the WLAN access system can establish a PDN connection correctly according to the indication. As a result, different types of UEs can access a PS network by using a WLAN, which can improve user experience.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a packet-switched network access method according to an embodiment of the present invention;
FIG. 2 is a schematic flowchart of a method for determining establishment of a PDN connection according to an embodiment of the present invention;
FIG. 3 is another schematic flowchart of a method for determining establishment of a PDN connection according to an embodiment of the present invention;
FIG. 4 is a schematic flowchart of a packet-switched network access method according to another embodiment of the present invention;
FIG. 5 is another schematic flowchart of a packet-switched network access method according to another embodiment of the present invention;
FIG. 6 is still another schematic flowchart of a packet-switched network access method according to another embodiment of the present invention;
FIG. 7 is a schematic block diagram of a WLAN access system according to an embodiment of the present invention;
FIG. 8 is a schematic block diagram of a determining module according to an embodiment of the present invention;
FIG. 9 is another schematic block diagram of a determining module according to an embodiment of the present invention;
FIG. 10 is a schematic block diagram of a receiving module according to an embodiment of the present invention;
FIG. 11 is a schematic block diagram of a user equipment according to an embodiment of the present invention;
FIG. 12 is another schematic block diagram of a user equipment according to an embodiment of the present invention; and
FIG. 13 is a schematic block diagram of a sending module according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that the technical solutions of the embodiments of the present invention may be applied to various communications systems, for example: a Global System for Mobile Communication (Global System of Mobile communication, "GSM" for short), a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, LTE time division duplex (Time Division Duplex, "TDD" for short), a Universal Mobile Telecommunication System (Universal Mobile Telecommunication System, "UMTS" for short), a Worldwide Interoperability for Microwave Access (Worldwide Interoperability for Microwave Access, "WiMAX" for short) communication system, and the like.

It should also be understood that in the embodiments of the present invention, a user equipment (User Equipment, "UE" for short) may be referred to as a terminal (Terminal), a mobile station (Mobile Station, "MS" for short), a mobile terminal (Mobile Terminal), or the like, and the user equipment may communicate with one or more core networks by using a radio access network (Radio Access Network, "RAN" for short). For example, the user equipment may be a mobile phone (or referred to as a "cellular" phone), a computer with a mobile terminal, or the like; and for example, the user equipment may also be a portable, pocket-sized, handheld, computer-embedded, or vehicle-mounted mobile apparatus, which exchange voice and/or data with the radio access network.

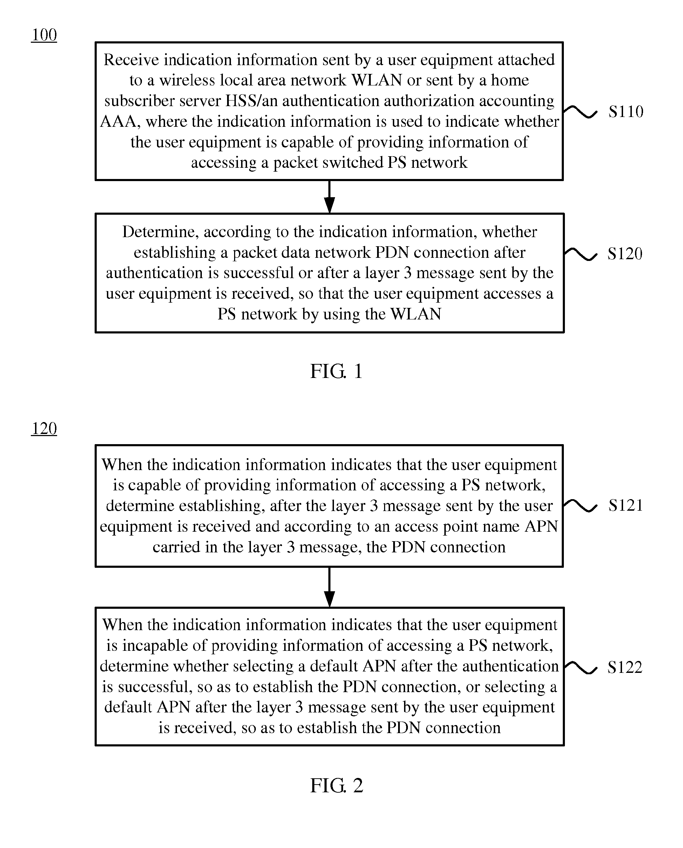

FIG. 1 shows a method 100 for accessing a packet switched network according to an embodiment of the present invention. As shown in FIG. 1, the method 100 includes:

S110. Receive indication information sent by a user equipment attached to a wireless local area network WLAN or sent by a home subscriber server (Home Subscriber Server, "HSS" for short)/an authentication authorization accounting (Authentication Authorization Accounting, "AAA" for short), where the indication information is used to indicate whether the user equipment is capable of providing information of accessing a packet switched (Packet Switch, "PS" for short) network; and

S120. Determine, according to the indication information, whether establishing a packet data network PDN connection after authentication is successful or after a layer 3 message sent by the user equipment is received, so that the user equipment accesses a PS network by using the WLAN.

For different types of user equipments that are intended to access the PS network by using the WLAN, a WLAN access system may receive indication information about the user equipment, where the indication information is used to indicate whether the user equipment is capable of providing information of accessing a PS network. In this way, the WLAN access system may determine, according to the indication information, whether establishing a PDN connection after authentication is successful or after a layer 3 message sent by the user equipment is received, so that the different types of user equipments can access the PS network by using the WLAN.

Therefore, in the packet-switched network access method according to the embodiment of the present invention, whether a user equipment is capable of providing information of accessing a packet switched PS network is indicated to a WLAN access system, so that the WLAN access system can establish a PDN connection correctly according to the indication. As a result, all the different types of UEs can access a PS network by using a WLAN, which can improve user experience.

In the embodiment of the present invention, the method 100 may be performed by the WLAN access system, for example, performed by a WLAN access gateway included in the WLAN access system. In the embodiment of the present invention, the WLAN access gateway is used as an example for illustration, but the embodiment of the present invention is not limited thereto.

It should be understood that, the terms "system" and "network" in this specification may usually be used interchangeably. The term "and/or" in the specification describes only an association relationship between associated objects, and means that three relationships may exist, for example, A and/or B may mean: A exists singly, both A and B exist, and B exists singly. In addition, the character "/" in this specification generally means that associated objects are in an "or" relationship.

In S110, the WLAN access system receives the indication information sent by the user equipment attached to the WLAN or sent by the HSS/AAA, where the indication information is used to indicate whether the user equipment is capable of providing information of accessing a PS network.

In the embodiment of the present invention, when the UE accesses the WLAN network and performs access authentication, the HSS/AAA may indicate, to the WLAN access network, whether the user equipment is capable of providing information of accessing a PS network, for example, the HSS/AAA may send the indication information to the WLAN access network according to a parameter set by an operator when the user equipment is attached to the network.

Optionally, the receiving indication information sent by a user equipment attached to a WLAN or sent by an HSS/AAA includes: receiving an access authentication and authorization answer (Access Authentication and Authorization Answer) message sent by the HSS/AAA, where the access authentication and authorization answer message includes the indication information.

In the embodiment of the present invention, when the UE accesses the WLAN network and performs access authentication, the UE may also indicate, to the WLAN access network, whether the UE is capable of providing information of accessing a PS network. Optionally, the receiving indication information sent by a user equipment attached to a WLAN or sent by an HSS/AAA includes: receiving an authentication response message sent by the user equipment, where the authentication response message includes the indication information; and preferably, receiving an extensible authentication protocol identity response (EAP-Identity Response, where "EAP" is short for Extensible Authentication Protocol) message sent by the user equipment, where the extensible authentication protocol identity response message includes the indication information.

Optionally, the receiving indication information sent by a user equipment attached to a WLAN or by an HSS/AAA includes: receiving an extensible authentication protocol identity response message sent by the user equipment, where the indication information is carried in a network access identifier (Network Access Identifier, "NAI" for short) field in the extensible authentication protocol identity response message.

In the embodiment of the present invention, before the UE accesses the WLAN network, the UE may indicate, to the WLAN access network, whether the UE is capable of providing information of accessing a PS network. Optionally, the receiving indication information sent by a user equipment attached to a WLAN or sent by an HSS/AAA includes: receiving an 802.11u message sent by the user equipment, where the 802.11u message includes the indication information.

In the embodiment of the present invention, the HSS/AAA or the UE may send various types of indication information to the WLAN access system, so as to indicate whether the user equipment is capable of providing information of accessing a packet switched PS network. For example, the indication information may be shown in an explicit manner, that is, the indication information may directly include a specific capability of the user equipment to provide information of accessing a PS network; and for another example, the indication information may be shown in an implicit manner, that is, the indication information may only include relevant information that is in a correspondence with whether the user equipment has the capability. Specifically, for example, "1" may be used to mean that the user equipment is capable of providing information of accessing a PS network, and "0" is used to mean that the user equipment is incapable of providing information of accessing a PS network. Certainly, other content may also be used to mean whether the user equipment is capable of providing information of accessing a PS network.

In the embodiment of the present invention, when the user equipment can provide parameters such as an APN and a handoff indication, it may mean that the user equipment is capable of providing information of accessing a PS network. Therefore, an APN reporting capability of the user equipment may also be used to indicate whether the user equipment is capable of providing information of accessing a PS network.

Specifically, when the UE can provide an APN, that is, the APN reporting capability of the user equipment is being capable of providing an APN, it may be determined that the user equipment is capable of providing information of accessing a PS network; when the UE cannot provide an APN, that is, the APN reporting capability of the user equipment is being incapable of providing an APN, it may be determined that the user equipment is incapable of providing information of accessing a PS network.

Therefore, optionally, in the embodiment of the present invention, the indication information includes the APN reporting capability of the user equipment. It should be understood that, in the embodiment of the present invention, the APN reporting capability of the user equipment may also be expressed in an explicit manner or an implicit manner. It should also be understood that, the indication information may also include other information, another parameter or other content, so as to indicate whether the user equipment is capable of providing information of accessing a packet switched PS network, but the embodiment of the present invention is not limited thereto.

For example, in the NAI field included in the extensible authentication protocol identity response message sent to the WLAN access system by the UE, the indication information is carried by extending the NAI field. For example, for NAI information in a format of "username@realm", a special character (such as "!" or "?") may be further added, and indication information is added after the special character, for example, "username@realm?indication", where "indication" is a character string meaning the indication information.

In S120, the WLAN access system determines, according to the indication information, whether establishing the packet data network PDN connection after the authentication is successful or after the layer 3 message sent by the user equipment is received, so that the user equipment accesses a PS network by using the WLAN.

In the embodiment of the present invention, when the indication information indicates that the user equipment is capable of providing information of accessing a PS network, the WLAN access system determines establishing the PDN connection after the layer 3 message sent by the user equipment is received; on the contrary, when the indication information indicates that the user equipment is incapable of providing information of accessing a PS network, or no indication information is received or the indication information is empty, the WLAN access system determines establishing the PDN connection after a layer 2 message is received or the layer 3 message is received. In the layer 3 message, the UE may provide an APN to be activated and/or a handoff indication. If the UE provides an APN, the WLAN access system may select the APN to establish the PDN connection.

Optionally, as shown in FIG. 2, the determining, according to the indication information, whether establishing a packet data network PDN connection after authentication is successful or after a layer 3 message sent by the user equipment is received includes:

S121. When the indication information indicates that the user equipment is capable of providing information of accessing a PS network, determine establishing, after the layer 3 message sent by the user equipment is received and according to an access point name APN carried in the layer 3 message, the PDN connection; and/or

S122. When the indication information indicates that the user equipment is incapable of providing information of accessing a PS network, determine whether selecting a default APN after the authentication is successful, so as to establish the PDN connection, or selecting a default APN after the layer 3 message sent by the user equipment is received, so as to establish the PDN connection.

Certainly, when a WLAN access system does not receive the indication information or the indication information is empty, the WLAN access system may also determine that the user equipment is incapable of providing information of accessing a PS network. Therefore, it may be determined whether selecting the default APN after the authentication is successful, so as to establish the PDN connection, or selecting the default APN after the layer 3 message sent by the user equipment is received, so as to establish the PDN connection, but the embodiment of the present invention is not limited thereto.

Optionally, the layer 3 (Layer 3) message includes a Dynamic Host Configuration Protocol (Dynamic Host Configuration Protocol, "DHCP" for short) message or a Router Solicitation (Router Solicitation, "RS" for short) message. Optionally, the layer 2 (Layer 2) message includes a message sent after the authentication is complete.

It should be understood that, in the embodiment of the present invention, for steps A and B, "B is performed after A" generally means that after step A is performed, step B is performed next. For example, "selecting a default APN after the authentication is successful, so as to establish a PDN connection" means that the PDN connection is established immediately after the authentication is successful, not that the PDN connection is established after the layer 3 message is received.

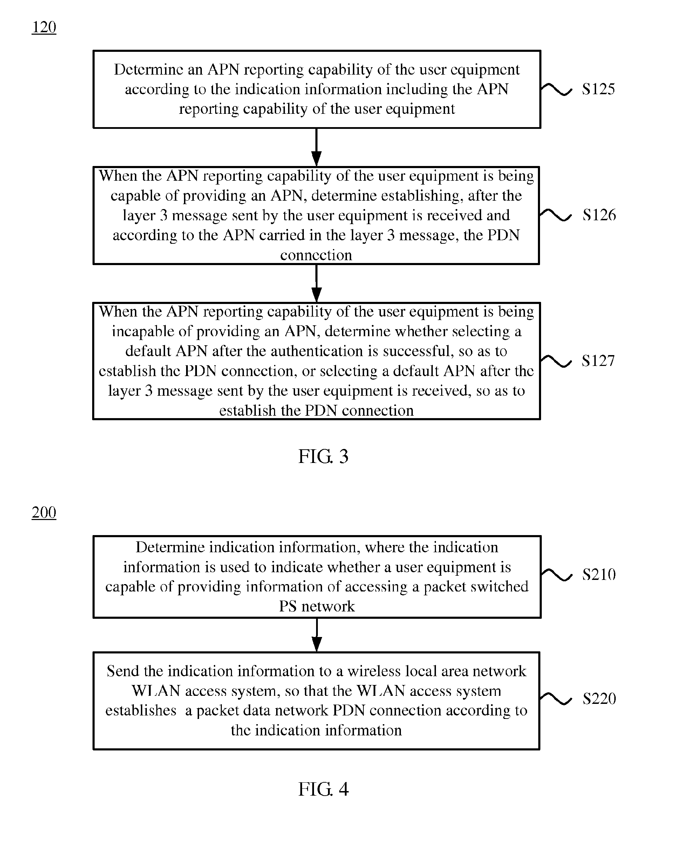

In the embodiment of the present invention, when the indication information includes an APN reporting capability of the user equipment, the WLAN access system may determine, according to the APN reporting capability, whether the user equipment is capable of providing information of accessing a PS network, and then determine the timing for establishing the PDN connection; the WLAN access system may also directly determine, according to the APN reporting capability, the timing for establishing the PDN connection. The following gives a specific description with reference to FIG. 3.

Optionally, as shown in FIG. 3, the determining, according to the indication information, whether establishing a packet data network PDN connection after authentication is successful or after a layer 3 message sent by the user equipment is received includes:

S125. Determine an APN reporting capability of the user equipment according to the indication information including the APN reporting capability of the user equipment;

S126. when the APN reporting capability of the user equipment is being capable of providing an APN, determine establishing, after the layer 3 message sent by the user equipment is received and according to the APN carried in the layer 3 message, the PDN connection; and/or

S127. when the APN reporting capability of the user equipment is being incapable of providing an APN, determine whether selecting a default APN after the authentication is successful, so as to establish the PDN connection, or selecting a default APN after the layer 3 message sent by the user equipment is received, so as to establish the PDN connection.

Certainly, when a WLAN access system does not receive the indication information or the indication information is empty, the WLAN access system may also determine that the user equipment is incapable of providing an APN, and therefore may determine whether selecting the default APN after the authentication is successful, so as to establish the PDN connection, or selecting the default APN after the layer 3 message sent by the user equipment is received, so as to establish the PDN connection, but the embodiment of the present invention is not limited thereto.

In the embodiment of the present invention, in a process of establishing a PDN connection triggered by the WLAN access system, the PDN connection may be established based on a general packet radio service tunneling protocol (GPRS Tunnel Protocol, "GTP" for short; general packet radio service (General Packet Radio Service, "GPRS" for short)), and may also be established based on a proxy mobile IP (Proxy Mobile IP, "PMIP" for short) protocol. If the PDN connection is established based on the GTP protocol, a create session request (Create Session Request) message is sent to a packet switched network gateway (PDN GateWay, "PGW" for short); if the PDN connection is established based on the PMIP protocol, a proxy binding update (Proxy Binding Update) message is sent to the PGW.

An APN selected by the WLAN access system is carried in a request message, which is sent to the PGW and used to request for establishment of the PDN connection. If the UE provides the handoff indication, the request message may further carry the handoff indication. If the request message includes the handoff indication, the PGW may allocate an IP address to a terminal, where the IP address has been allocated to the terminal before a handoff, so that the IP address remains unchanged before and after the handoff, better ensuring service continuity.

It should be understood that, in the embodiment of the present invention, if a functional module for authentication and a functional module for PDN connection establishment that are in the WLAN access system are separately located on different entities of the WLAN access system, the functional module for authentication needs to notify the functional module for PDN connection establishment of the indication information.

It should also be understood that sequence numbers of the foregoing processes do not mean execution sequences in various embodiments of the present invention. The execution sequences of the processes should be determined according to functions and internal logic of the processes, and should not be construed as any limitation on implementation processes of the embodiments of the present invention.

Therefore, in the packet-switched network access method according to the embodiment of the present invention, whether a user equipment is capable of providing information of accessing a packet switched PS network is indicated to a WLAN access system, so that the WLAN access system can establish a PDN connection correctly according to the indication. As a result, different types of UEs can access a PS network by using a WLAN, which can improve user experience.

With reference to FIG. 1 to FIG. 3, the above describes in detail, from a perspective of a WLAN access system, the packet-switched network access method according to the embodiments of the present invention. With reference to FIG. 4 to FIG. 6, the following describes, from a perspective of a user equipment, a packet-switched network access method according to the embodiments of the present invention.

FIG. 4 shows a method 200 for accessing a packet switched network according to the embodiment of the present invention, where the method 200 may be performed by a user equipment UE. As shown in FIG. 4, the method 200 includes:

S210. Determine indication information, where the indication information is used to indicate whether the user equipment is capable of providing information of accessing a packet switched PS network; and

S220. Send the indication information to a wireless local area network WLAN access system, so that the WLAN access system establishes a packet data network PDN connection according to the indication information.

Therefore, in the packet-switched network access method according to the embodiment of the present invention, whether a user equipment is capable of providing information of accessing a packet switched PS network is indicated to a WLAN access system, so that the WLAN access system can establish a PDN connection correctly according to the indication. As a result, different types of UEs can access a PS network by using a WLAN, which can improve user experience.

In the embodiment of the present invention, the capability of the user equipment to provide information of accessing a PS network may be shown in an explicit manner, that is, the indication information may directly include a specific capability of the user equipment to provide information of accessing a PS network; a capability of the user equipment to provide information of accessing a PS network may also be shown in an implicit manner, for example, the indication information may include only relevant information that is in a correspondence with whether the user equipment has the capability. Specifically, for example, "1" may be used to mean that the user equipment is capable of providing information of accessing a PS network, and "0" may be used to mean that the user equipment is incapable of providing information of accessing a PS network. Certainly, other content may also be used to mean whether the user equipment is capable of providing information of accessing a PS network.

Optionally, in the embodiment of the present invention, the indication information includes an APN reporting capability of the user equipment, and indicates whether the user equipment is capable of providing information of accessing a packet switched PS network. Specifically, when the UE can provide an APN, that is, the APN reporting capability of the user equipment is being capable of providing an APN, it may be determined that the user equipment is capable of providing information of accessing a PS network; when the UE cannot provide an APN, that is, the APN reporting capability of the user equipment is being incapable of providing an APN, or no indication information is received or the indication information is empty, it may be determined that the user equipment is incapable of providing information of accessing a PS network.

It should be understood that, in the embodiment of the present invention, the APN reporting capability of the user equipment may also be expressed in an explicit manner or an implicit manner. It should also be understood that, the indication information may also include other information, another parameter or other content to indicate whether the user equipment is capable of providing information of accessing a packet switched PS network, but the embodiment of the present invention is not limited thereto.

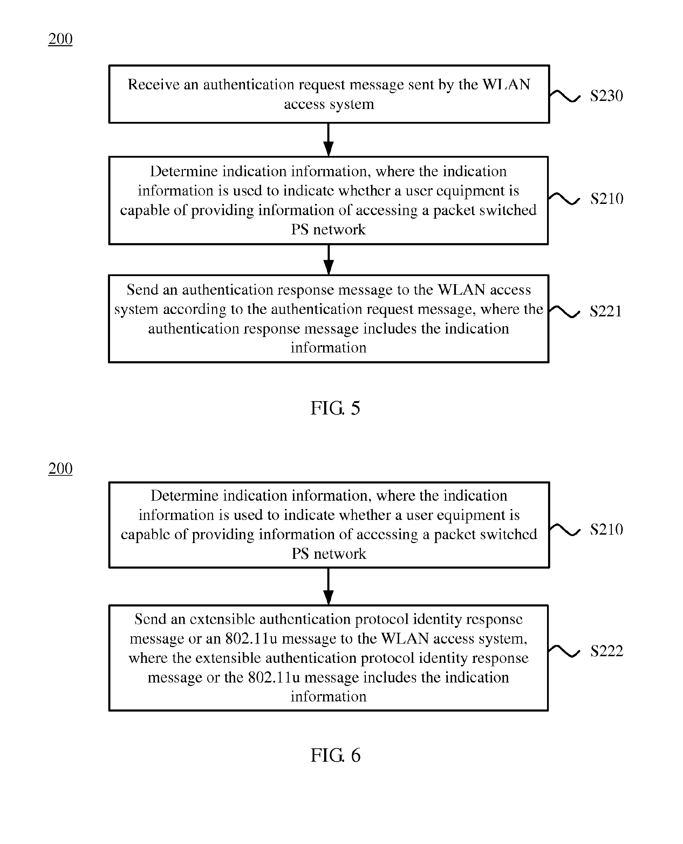

In the embodiment of the present invention, when the UE accesses the WLAN network and performs access authentication, the UE may indicate, to the WLAN access network, whether the UE is capable of providing information of accessing a PS network; before the UE accesses the WLAN network, the UE may also indicate, to the WLAN access network, whether the UE is capable of providing information of accessing a PS network. The following gives a description with reference to FIG. 5 and FIG. 6 separately.

Optionally, as shown in FIG. 5, the method 200 according to the embodiment of the present invention may further include:

S230. Receive an authentication request message sent by the WLAN access system; and
the sending the indication information to a wireless local area network WLAN access system includes:

S221. Send an authentication response message to the WLAN access system according to the authentication request message, where the authentication response message includes the indication information.

That is, in a process in which the UE accesses the WLAN network and performs access authentication, the UE indicates, to the WLAN access system, whether the user equipment is capable of providing information of accessing a packet switched PS network, so that the WLAN access system can establish the PDN connection correctly according to the indication. As a result, different types of UEs can access a PS network by using the WLAN, which can improve user experience.

Optionally, in the embodiment of the present invention, as shown in FIG. 6, the sending the indication information to a wireless local area network WLAN access system includes:

S222. Send an extensible authentication protocol identity response message or an 802.11u message to the WLAN access system, where the extensible authentication protocol identity response message or the 802.11u message includes the indication information.

Optionally, the UE sends the extensible authentication protocol identity response message to the WLAN access system, where the indication information is carried in a network access identifier NAI field in the extensible authentication protocol identity response message.

It should be understood that, interaction, relevant features and functions, and the like between the UE and the WLAN access system, which are described from a perspective of the UE side, correspond to those described from a perspective of the WLAN access system side. For brevity, details are not repeatedly described herein.

It should also be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

Therefore, in the packet-switched network access method according to the embodiment of the present invention, whether a user equipment is capable of providing information of accessing a packet switched PS network is indicated to a WLAN access system, so that the WLAN access system can establish a PDN connection correctly according to the indication. As a result, different types of UEs can access a PS network by using a WLAN, which can improve user experience.

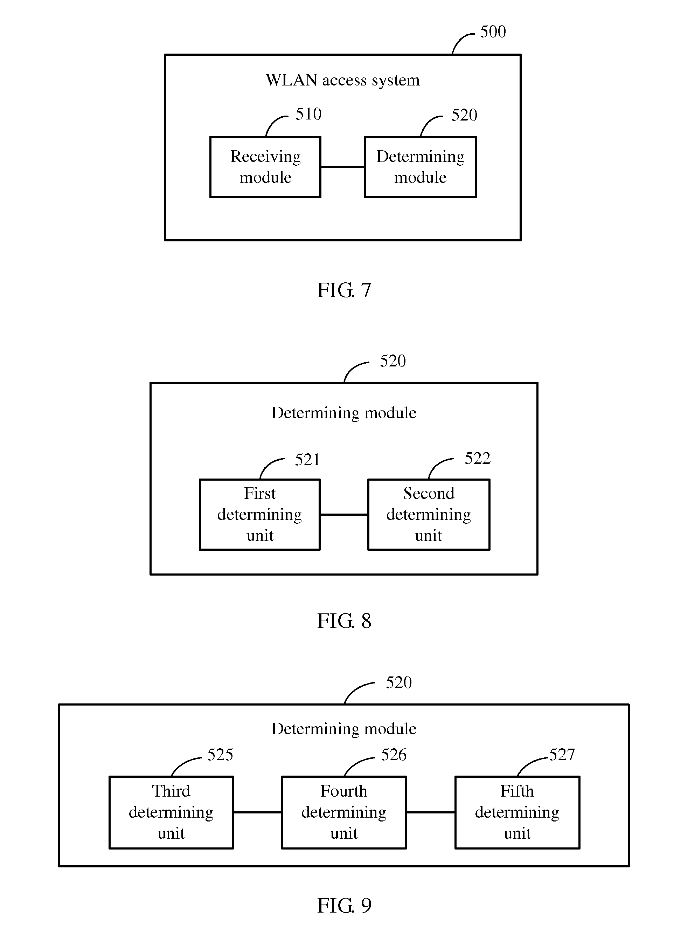

With reference to FIG. 1 to FIG. 6, the above describes the packet-switched network access method according to the embodiments of the present invention in detail. With reference to FIG. 7 to FIG. 13, the following describes a WLAN access system and a user equipment according to the embodiments of the present invention in detail.

FIG. 7 is a schematic block diagram of a WLAN access system 500 according to an embodiment of the present invention. As shown in FIG. 7, the WLAN access system 500 includes:
a receiving module 510, configured to receive indication information sent by a user equipment attached to a wireless local area network WLAN or sent by a home subscriber server HSS/an authentication authorization accounting AAA, where the indication information is used to indicate whether the user equipment is capable of providing information of accessing a packet switched PS network; and
a determining module 520, configured to determine, according to the indication information received by the receiving module 510, whether establishing a packet data network PDN connection after authentication is successful or after a layer 3 message sent by the user equipment is received, so that the user equipment accesses a PS network by using the WLAN.

Therefore, in the WLAN access system according to the embodiment of the present invention, indication information is received, where the indication information is used to indicate whether a user equipment is capable of providing information of accessing a packet switched PS network, so that the WLAN access system can establish a PDN connection correctly according to the indication. As a result, different types of UE can access a PS network by using a WLAN, which can improve user experience.

Optionally, in the embodiment of the present invention, as shown in FIG. 8, the determining module 520 includes:
a first determining unit 521, configured to: when the indication information indicates that the user equipment is capable of providing information of accessing a PS network, determine establishing, after the layer 3 message sent by the user equipment is received and according to an access point name APN carried in the layer 3 message, the PDN connection; and/or
a second determining unit 522, configured to: when the indication information indicates that the user equipment is incapable of providing information of accessing a PS network, determine whether selecting a default APN after the authentication is successful, so as to establish the PDN connection, or selecting a default APN after the layer 3 message sent by the user equipment is received, so as to establish the PDN connection.

Optionally, in the embodiment of the present invention, the receiving module 510 is further configured to receive the indication information including an APN reporting capability of the user equipment.

Optionally, in the embodiment of the present invention, as shown in FIG. 9, the determining module 520 includes:
a third determining unit 525, configured to determine an APN reporting capability of the user equipment according to the indication information including the APN reporting capability of the user equipment.
a fourth determining unit 526, configured to: when the APN reporting capability of the user equipment is being capable of providing an APN, determine establishing, after the layer 3 message sent by the user equipment is received and according to the APN carried in the layer 3 message, the PDN connection; and/or
a fifth determining unit 527, configured to: when the APN reporting capability of the user equipment is being incapable of providing an APN, determine whether selecting a default APN after the authentication is successful, so as to establish the PDN connection, or selecting a default APN after the layer 3 message sent by the user equipment is received, so as to establish the PDN connection.

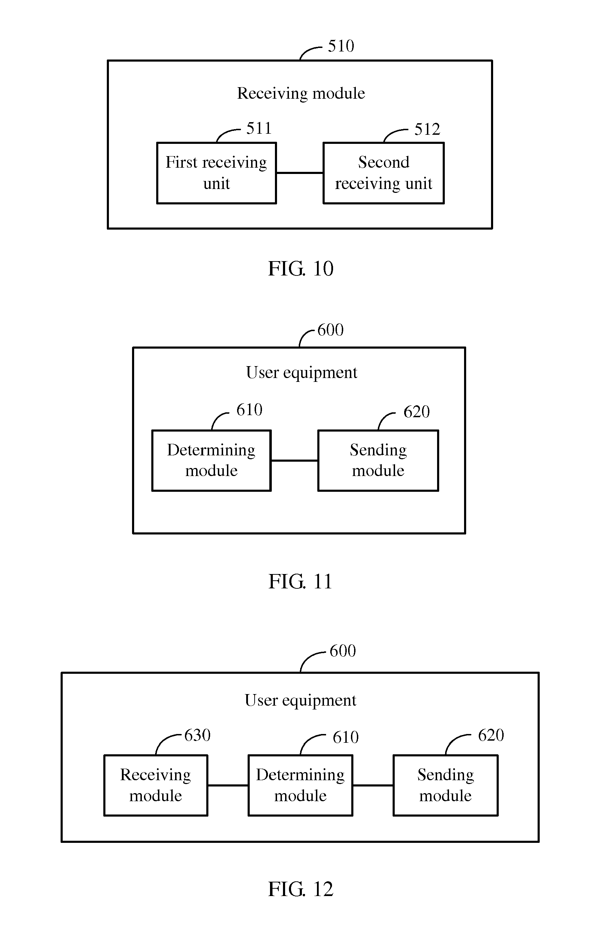

Optionally, in the embodiment of the present invention, as shown in FIG. 10, the receiving module 510 includes:
a first receiving unit 511, configured to receive an access authentication and authorization answer message sent by the HSS/AAA, where the access authentication and authorization answer message includes the indication information.

Optionally, in the embodiment of the present invention, as shown in FIG. 10, the receiving module 510 includes:
a second receiving unit 512, configured to receive an extensible authentication protocol identity response message or an 802.11u message sent by the user equipment, where the extensible authentication protocol identity response message or the 802.11u message includes the indication information.

Optionally, in the embodiment of the present invention, the second receiving unit 512 is further configured to:
receive the extensible authentication protocol identity response message sent by the user equipment, where the indication information is carried in a network access identifier NAI field in the extensible authentication protocol identity response message.

Optionally, in the embodiment of the present invention, the WLAN access system 500 includes a WLAN access gateway.

In the embodiment of the present invention, a capability of the user equipment to provide information of accessing a PS network may be shown in an explicit manner, that is, the indication information may directly include a specific capability of the user equipment to provide information of accessing a PS network; a capability of the user equipment to provide information of accessing a PS network may also be shown in an implicit manner, for example, the indication information may include only relevant information that is in a correspondence with whether the user equipment has the capability. Specifically, for example, "1" may be used to mean that the user equipment is capable of providing information of accessing a PS network, and "0" may be used to mean that the user equipment is incapable of providing information of accessing a PS network. Certainly, other content may also be used to mean whether the user equipment is capable of providing information of accessing a PS network. For example, it may be indicated, by of the fact that the WLAN access system does not receive the indication information or the indication information is empty, that the user equipment is incapable of providing information of accessing a PS network.

Optionally, in the embodiment of the present invention, the indication information includes an APN reporting capability of the user equipment, and indicates whether the user equipment is capable of providing information of accessing a packet switched PS network. Specifically, when the UE can provide an APN, that is, the APN reporting capability of the user equipment is being capable of providing an APN, it may be determined that the user equipment is capable of providing information of accessing a PS network; when the UE cannot provide the APN, that is, the APN reporting capability of the user equipment is being incapable of providing an APN, it may be determined that the user equipment is incapable of providing information of accessing a PS network.

It should be understood that, in the embodiment of the present invention, the APN reporting capability of the user equipment may also be expressed in an explicit manner or an implicit manner. It should also be understood that, the indication information may also include other information, another parameter or other content to indicate whether the user equipment is capable of providing information of accessing a packet switched PS network, but the embodiment of the present invention is not limited thereto.

The WLAN access system 500 according to the embodiment of the present invention may correspond to the WLAN access system in the method of the embodiments of the present invention, and the foregoing and other operations and/or functions of modules of the WLAN access system 500 are separately used to implement the corresponding processes of the methods shown in FIG. 1 to FIG. 3. For brevity, details are not repeatedly described herein.

Therefore, in the WLAN access system according to the embodiment of the present invention, indication information is received, where the indication information is used to indicate whether a user equipment is capable of providing information of accessing a packet switched PS network, so that the WLAN access system can establish a PDN connection correctly according to the indication. As a result, different types of UE can access a PS network by using a WLAN, which can improve user experience.

FIG. 11 shows a schematic block diagram of a user equipment 600 according to an embodiment of the present invention. As shown in FIG. 11, the user equipment 600 includes:
a determining module 610, configured to determine indication information, where the indication information is used to indicate whether the user equipment is capable of providing information of accessing a packet switched PS network; and
a sending module 620, configured to send the indication information determined by the determining module 610 to a wireless local area network WLAN access system, so that the WLAN access system establishes a packet data network PDN connection according to the indication information.

Therefore, in the user equipment according to the embodiment of the present invention, whether the user equipment is capable of providing information of accessing a packet switched PS network is indicated to a WLAN access system, so that the WLAN access system can establish a PDN connection correctly according to the indication. As a result, different types of UEs can access a PS network by using a WLAN, which can improve user experience.

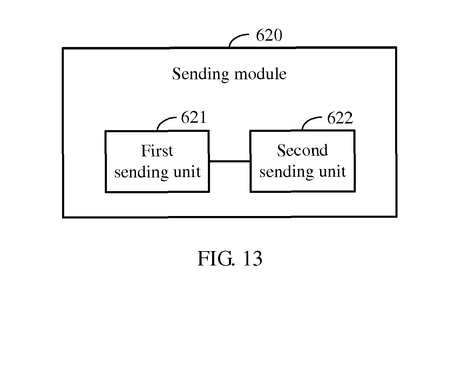

Optionally, in the embodiment of the present invention, as shown in FIG. 12 and FIG. 13, the user equipment 600 further includes:
a receiving module 630, configured to receive an authentication request message sent by the WLAN access system; and
the sending module 620 includes:
   a first sending unit 621, configured to send an authentication response message to the WLAN access system according to the authentication request message received by the receiving module, where the authentication response message includes the indication information determined by the determining module.

Optionally, in the embodiment of the present invention, as shown in FIG. 13, the sending module 620 includes:
a second sending unit 622, configured to send an extensible authentication protocol identity response message or an 802.11u message to the WLAN access system, where the extensible authentication protocol identity response message or the 802.11u message includes the indication information.

Optionally, in the embodiment of the present invention, the second sending unit 622 is further configured to:
send the extensible authentication protocol identity response message to the WLAN access system, where the indication information is carried in a network access identifier NAI field in the extensible authentication protocol identity response message.

Optionally, in the embodiment of the present invention, the determining module 610 is further configured to determine the indication information including an access point name APN reporting capability of the user equipment.

In the embodiment of the present invention, a capability of the user equipment to provide information of accessing a PS network may be shown in an explicit manner, that is, the indication information may directly include a specific capability of the user equipment to provide information of accessing a PS network; a capability of the user equipment to provide information of accessing a PS network may also be shown in an implicit manner, for example, the indication information may include only relevant information that is in a correspondence with whether the user equipment has the capability. Specifically, for example, "1" may be used to mean that the user equipment is capable of providing information of accessing a PS network, and "0" may be used to mean that the user equipment is incapable of providing information of accessing a PS network. Certainly, other content may also be used to mean whether the user equipment is capable of providing information of accessing a PS network.

Optionally, in the embodiment of the present invention, the indication information includes an APN reporting capability of the user equipment, and indicates whether the user equipment is capable of providing information of accessing a packet switched PS network. Specifically, when the UE can provide an APN, that is, the APN reporting capability of the user equipment is being capable of providing an APN, it may be determined that the user equipment is capable of providing information of accessing a PS network; when the UE cannot provide an APN, that is, the APN reporting capability of the user equipment is being incapable of providing an APN, or no indication information is received or the indication information is empty, it may be determined that the user equipment is incapable of providing information of accessing a PS network.

It should be understood that, in the embodiment of the present invention, the APN reporting capability of the user equipment may also be expressed in an explicit manner or an implicit manner. It should also be understood that, the indication information may also include other information, another parameter or other content to indicate whether the user equipment is capable of providing information of accessing a packet switched PS network, but the embodiment of the present invention is not limited thereto.

The user equipment 600 according to the embodiment of the present invention may correspond to the user equipment in the method of the embodiments of the present invention, and the foregoing and other operations and/or functions of the modules of the user equipment 600 are separately used to implement the corresponding processes of the methods shown in FIG. 4 to FIG. 6. For brevity, details are not repeatedly described herein.

Therefore, in the user equipment according to the embodiment of the present invention, whether the user equipment is capable of providing information of accessing a packet switched PS network is indicated to a WLAN access system, so that the WLAN access system can establish a PDN connection correctly according to the indication. As a result, different types of UEs can access a PS network by using a WLAN, which can improve user experience.

A person of ordinary skill in the art may be aware that, in combination with the examples described in the embodiments disclosed in this specification, units and algorithm steps may be implemented by electronic hardware or a combination of computer software and electronic hardware. To clearly describe the interchangeability between hardware and software, compositions and steps of each example has been generally described above according to functions. Whether the functions are performed by the hardware or the software depends on particular applications and design constraint conditions of the technical solutions. A person skilled in the art may use different methods to implement the described functions for each particular application, but it shall not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A packet-switched network access method, comprising:
receiving indication information sent by a user equipment attached to a wireless local area network WLAN or sent by a home subscriber server HSS/an authentication authorization accounting AAA, wherein the indication information is used to indicate whether the user equipment is capable of providing information of accessing a packet switched PS network; and
determining, according to the indication information, whether establishing a packet data network PDN connection after authentication is successful or after a layer 3 message sent by the user equipment is received, so that the user equipment accesses a PS network by using the WLAN.

2. The method according to claim 1, wherein the determining, according to the indication information, whether establishing a packet data network PDN connection after authentication is successful or after a layer 3 message sent by the user equipment is received comprises:
when the indication information indicates that the user equipment is capable of providing information of accessing a PS network, determining establishing, after the layer 3 message sent by the user equipment is received and according to an access point name APN carried in the layer 3 message, the PDN connection; and/or
when the indication information indicates that the user equipment is incapable of providing information of accessing a PS network, determining whether selecting a default APN after the authentication is successful, so as to establish the PDN connection, or selecting a default APN after the layer 3 message sent by the user equipment is received, so as to establish the PDN connection.

3. The method according to claim 1, wherein the indication information comprises:
an APN reporting capability of the user equipment.

4. The method according to claim 3, wherein the determining, according to the indication information, whether establishing a packet data network PDN connection after authentication is successful or after a layer 3 message sent by the user equipment is received comprises:
determining the APN reporting capability of the user equipment according to the indication information comprising the APN reporting capability of the user equipment;
when the APN reporting capability of the user equipment is being capable of providing an APN, determining establishing, after the layer 3 message sent by the user equipment is received and according to the APN carried in the layer 3 message, the PDN connection; and/or
when the APN reporting capability of the user equipment is being incapable of providing an APN, determining whether selecting a default APN after the authentication is successful, so as to establish the PDN connection, or selecting a default APN after the layer 3 message sent by the user equipment is received, so as to establish the PDN connection.

5. The method according to any one of claims 1 to 4, wherein the receiving indication information sent by a user equipment attached to a WLAN or sent by an HSS/ AAA comprises:
receiving an access authentication and authorization answer message sent by the HSS/AAA, wherein the access authentication and authorization answer message comprises the indication information.

6. The method according to any one of claims 1 to 4, wherein the receiving indication information sent by a user equipment attached to a WLAN or sent by an HSS/ AAA comprises:
receiving an extensible authentication protocol identity response message or an 802.11u message sent by the user equipment, wherein the extensible authentication protocol identity response message or the 802.11u message comprises the indication information.

7. The method according to claim 6, wherein the receiving indication information sent by a user equipment attached to a WLAN or sent by an HSS/ AAA comprises:
receiving the extensible authentication protocol identity response message sent by the user equipment, wherein the indication information is carried in a network access identifier NAI field in the extensible authentication protocol identity response message.

8. A packet-switched network access method, comprising:
determining indication information, wherein the indication information is used to indicate whether a user equipment is capable of providing information of accessing a packet switched PS network; and
sending the indication information to a wireless local area network WLAN access system, so that the WLAN access system establishes a packet data network PDN connection according to the indication information.

9. The method according to claim 8, wherein the method further comprises:
receiving an authentication request message sent by the WLAN access system; wherein
the sending the indication information to a wireless local area network WLAN access system comprises:
sending an authentication response message to the WLAN access system according to the authentication request message, wherein the authentication response message comprises the indication information.

10. The method according to claim 8, wherein the sending the indication information to a wireless local area network WLAN access system comprises:
sending an extensible authentication protocol identity response message or an 802.11u message to the WLAN access system, wherein the extensible authentication protocol identity response message or the 802.11u message comprises the indication information.

11. The method according to claim 8, wherein the sending the indication information to a wireless local area network WLAN access system comprises:
sending an extensible authentication protocol identity response message to the WLAN access system, wherein the indication information is carried in a network access identifier NAI field in the extensible authentication protocol identity response message.

12. The method according to any one of claims 8 to 11, wherein the indication information comprises an access point name APN reporting capability of the user equipment.

13. A WLAN access system, comprising:
a receiving module, configured to receive indication information sent by a user equipment attached to a wireless local area network WLAN or sent by a home subscriber server HSS/an authentication authorization accounting AAA, wherein the indication information is used to indicate whether the user equipment is capable of providing information of accessing a packet switched PS network; and
a determining module, configured to determine, according to the indication information received by the receiving module, whether establishing a packet data network PDN connection after authentication is successful or after a layer 3 message sent by the user equipment is received, so that the user equipment accesses a PS network by using the WLAN.

14. The WLAN access system according to claim 13, wherein the determining module comprises:
a first determining unit, configured to: when the indication information indicates that the user equipment is capable of providing information of accessing a PS network, determine establishing, after the layer 3 message sent by the user equipment is received and according to an access point name APN carried in the layer 3 message, the PDN connection; and/or
a second determining unit, configured to: when the indication information indicates that the user equipment is incapable of providing information of accessing a PS network, determine whether selecting a default APN after the authentication is successful, so as to establish the PDN connection, or selecting a default APN after the layer 3 message sent by the user equipment is received, so as to establish the PDN connection.

15. The WLAN access system according to claim 13, wherein the receiving module is further configured to receive the indication information comprising an APN reporting capability of the user equipment.

16. The WLAN access system according to claim 15, wherein the determining module comprises:
a third determining unit, configured to determine the APN reporting capability of the user equipment according to the indication information comprising the APN reporting capability of the user equipment.
a fourth determining unit, configured to: when the APN reporting capability of the user equipment is being capable of providing an APN, determine establishing, after the layer 3 message sent by the user equipment is received and according to the APN carried in the layer 3 message, the PDN connection; and/or
a fifth determining unit, configured to: when the APN reporting capability of the user equipment is being incapable of providing an APN, determine whether selecting a default APN after the authentication is successful, so as to establish the PDN connection, or selecting a default APN after the layer 3 message sent by the user equipment is received, so as to establish the PDN connection.

17. The WLAN access system according to any one of claims 13 to 16, wherein the receiving module comprises:
a first receiving unit, configured to receive an access authentication and authorization answer message sent by the HSS/AAA, wherein the access authentication and authorization answer message comprises the indication information.

18. The WLAN access system according to any one of claims 13 to 16, wherein the receiving module comprises:
a second receiving unit, configured to receive an extensible authentication protocol identity response message or an 802.11u message sent by the user equipment, wherein the extensible authentication protocol identity response message or the 802.11u message comprises the indication information.

19. The WLAN access system according to claim 18, wherein the second receiving unit is further configured to:
receive the extensible authentication protocol identity response message sent by the user equipment, wherein the indication information is carried in a network access identifier NAI field in the extensible authentication protocol identity response message.

20. A user equipment, comprising:
a determining module, configured to determine indication information, wherein the indication information is used to indicate whether the user equipment is capable of providing information of accessing a packet switched PS network; and
a sending module, configured to send the indication information determined by the determining module to a wireless local area network WLAN access system, so that the WLAN access system establishes a packet data network PDN connection according to the indication information.

21. The user equipment according to claim 20, wherein the user equipment further comprises:
a receiving module, configured to receive an authentication request message sent by the WLAN access system; and
the sending module comprises:
a first sending unit, configured to send an authentication response message to the WLAN access system according to the authentication request message received by the receiving module, wherein the authentication response message comprises the indication information determined by the determining module.

22. The user equipment according to claim 20, wherein the sending module comprises:
a second sending unit, configured to send an extensible authentication protocol identity response message or an 802.11u message to the WLAN access system, wherein the extensible authentication protocol identity response message or the 802.11u message comprises the indication information.

23. The user equipment according to claim 20, wherein the second sending unit is further configured to:
send an extensible authentication protocol identity response message to the WLAN access system, wherein the indication information is carried in a network access identifier NAI field in the extensible authentication protocol identity response message.

24. The user equipment according to any one of the claims 20 to 23, wherein the determining module is further configured to determine the indication information comprising an access point name APN reporting capability of the user equipment.
